# EUROPEAN PATENT APPLICATION

(11) **EP 2 372 452 A1**
(43) Date of publication of application: **05.10.2011**
(21) Application number: 10157536.3
(22) Date of filing: 24.03.2010
(51) Int. Cl.: G03B 35/04

(54) **Stereoscopic imager**

(71) Applicant: IEE INTERNATIONAL ELECTRONICS & ENGINEERING S.A., 6468 Echternach (LU)
(72) Inventor: Decoster, Yves, 6760 ETHE (BE)
(74) Representative: Office Freylinger

(57) **Abstract**

A stereoscopic imager (10) for producing a pair of stereoscopic images comprises a first optical system (20a) defining a first light path for viewing a scene (12) as from a first point of sight and a second optical system (20b) defining a second light path for viewing the scene as from a second, different point of sight. The light entrance (32) of a light sensor (34) and a scanning device (30) are arranged in facing relationship to one another. The scanning device is positioned where the first and second light paths intersect, to alternately scan the field of view of the light sensor across the scene as viewed from the first and second point of sight. The scanning device comprises a resonance-type micro-mechanical mirror (38), mounted on first torsion bars (40, 40') defining a first tilting axis and an actuator (36) for driving the micro-mechanical mirror in angular oscillatory motion about the first tilting axis. The scanning device has a neutral position, in which the first and second light paths are deviated by the scanning device into a first and second direction, respectively. The light entrance is arranged in the bisecting plane of the first and second directions.

## Description

### Technical field

The present invention generally relates to stereoscopic imaging, in particular to a stereoscopic scanner, e.g. for the recording of a pair of thermographic stereoscopic images.

### Background Art

In stereoscopic imaging, images are recorded that correspond to at least two shifted views of a scene. Conventional stereoscopic imagers are obtained by providing two complete 2D-imagers of the same type, arranged side-by-side. Such stereoscopic imagers have two complete sets of optical systems and detectors (e.g. CMOS and/or CCD image sensor).

Such duplication of the hardware generally results in grossly twice as high hardware costs than for a 2D-imager. As large CMOS or CCD sensors are nowadays available at reasonable price, duplication of costs may be considered a minor issue if these types of sensors can be used for the application concerned, i.e. for imaging in the UV to near-infrared (wavelengths of up to 1.1 µm) spectral region. In case of thermographic applications, which typically requires imager sensitivity in the mid- and long-wavelength infrared range (about 0.9 to 14 µm), sensors other than CCD and CMOS sensors have to be used. Today, most thermal imaging cameras are based on specialized focal plane arrays (FPAs) that respond to longer wavelengths (e.g. InSb, InGaAs, HgCdTe and QWIP FPA, cooled or uncooled microbolometer FPA, pyroelectric detector arrays, etc.) As thermographic cameras are significantly more expensive than their visible-spectrum counterparts, the above-mentioned duplication of the costs is a serious obstacle to market penetration. Furthermore, the commercially available thermographic cameras have significantly lower resolution than state-of-art CCD or CMOS sensors (typically 320x240 pixels, up to 640x512 in high-end models.) Low resolution may be an obstacle for image processing and computer vision applications.

US patent 4,682,029 discloses a stereoscopic infrared imager that includes optics for producing infrared images of two different views of an infrared scene. A rotating scanning mirror alternately scans the two infrared images across a single infrared detector array. The detector array modulates a light source array to convert the infrared images into visible images, which an observer can view by means of a stereoscopic display device. The display device comprises a second rotating scanning mirror that alternately scans the image of the light source array across the two eyes of the observer. The stereoscopic infrared imager of US 4,682,029 has the advantage that a single IR detector array is used for both images of the stereoscopic image pair. However, the rotating scanning mirror makes it necessary to use at least a line array of plural individual IR detectors. Another disadvantage of the imager is that a complicated mechanical system has to be provided to scan the images. The slightest imbalance of the rotating mirror may result in noticeable loss of image quality, e.g. due to jumps between the frames obtained with the different faces of the rotating mirror.

### Technical problem

It is an object of the present invention to provide an improved stereoscopic imager. This object is achieved by a stereoscopic imager as claimed in claim 1.

### General Description of the Invention

According to the invention, a stereoscopic imager for producing a pair of stereoscopic images (the so-called "stereoscopic half-images") of a scene comprises a first optical system defining a first light path for viewing the scene as from a first point of sight and a second optical system defining a second light path for viewing the scene as from a second point of sight different from the first point of sight. A light sensor (photoelectric transducer for converting light into an electrical signal) has a light entrance arranged therewith, from which light entering through the light entrance is passed on to the light sensor. Such light entrance may e.g. be provided as an aperture, a lens, a system of lenses, a focusing mirror, an optical fiber or any combination of optical elements. A scanning device is arranged with respect to the light entrance at a position where the first and second light paths intersect, to alternately scan the field of view of the light sensor across the scene as viewed from the first and second point of sight, respectively. The field of view of the sensor corresponds to a solid angle from within which light rays are intercepted at the light sensor. It is understood that, as in all scanning systems, the field of view of the light sensor is substantially narrower than the solid angle corresponding to the scene to be imaged. One may think of the field of view of the light sensor as the reciprocal of a pencil beam. It should be noted that the field of view of the light sensor is determined not only by the sensor itself but also by the light entrance, and any other optical element in the light paths of the stereoscopic imager. The scanning device is preferably arranged in facing relationship with the light entrance. Said facing relationship may be immediate but it could also be established via one or more mirrors or other optical element positioned to the scanning device and the light entrance in such a way to deflect and/or guide the light paths from the scanning device to the light entrance.

As will be appreciated, the scanning device comprises a resonance-type micro-mechanical mirror, mounted on first torsion bars defining a first tilting axis and an actuator for driving the micro-mechanical mirror in angular oscillatory (rocking) motion about the first tilting axis. The scanning device has a neutral position, in which the first and second light paths are deviated by the scanning device into a first and second direction, respectively. The light entrance is arranged in the bisecting plane of the first and second directions, more preferably on the line forming the intersection of the bisecting plane and the plane containing the first and second directions.

The scanning device may be of the one-dimensional type (i.e. able to scan in one direction only), in which case the light sensor preferably comprises an at least one-dimensional array of light sensing elements ("pixel sensors"). More preferably, however, the scanning device is of the two-dimensional type (i.e. able to scan in two directions). In this case, the micro-mechanical mirror and the first torsion bars are preferably mounted on second torsion bars defining a second tilting axis, and the actuator is preferably configured for driving the micro-mechanical mirror in a two-dimensional angular oscillatory (rocking) motion about the second tilting axis. The two-dimensional angular oscillatory motion about the first and second axes achieves a two-dimensional scanning curve. A scanning device of the two-dimensional type may also be achieved by means of two resonance-type micro-mechanical mirrors instead of a single one. In this case, the second resonance-type micro-mechanical mirror is mounted on second torsion bars defining a second tilting axis and a second actuator is provided for driving the second micro-mechanical mirror in angular oscillatory motion about the second tilting axis. The first and second tilting axes are arranged relative to one another such that the micro-mechanical mirrors jointly achieve a two-dimensional scanning curve when driven by their respective actuators. The two-dimensional scanning curve preferably corresponds to a Lissajou curve (obtained by the superposition of an angular oscillatory movement on the first tilting axis and an angular oscillatory movement on the second tilting axis). The cycle durations of the first and second angular oscillatory movements are preferably chosen relative to one another such that the micro-mechanical mirror sweeps the pencil-like field of view of the light sensor through the scene according to a dense pattern.

If the scanning device comprises two resonance-type micro-mechanical mirrors, one or more intermediary mirrors may be arranged in the first and second light paths between the micro-mechanical mirrors.

Preferably, the neutral position of the micro-mechanical mirror corresponds to the equilibrium position of the first torsion bars and/or the second torsion bars, i.e. the angular position taken by the micro-mechanical mirror(s) in the absence of an oscillatory driving force applied to it by the respective actuator.

The first optical system is configured to collect light propagating from the scene towards the first point of sight in a first bundle of rays following the first light path, and the second optical system is configured to collect light propagating from the scene towards the second point of sight in a second bundle of rays following the second light path. The light entrance is preferably positioned in such a way that light of at most one of the first and second bundles of rays passes there through at a time and is coupled into the light sensor. In other words, the light entrance is preferably positioned at a distance from the scanning device at which the first and second bundles of rays no longer overlap ("behind" the intersection of the bundles of rays). Accordingly, the light sensor receives light only from one of the optical systems at a time. If for geometrical or other reasons, one chooses to position the light entrance at a distance from the scanning device at which the first and second bundles of rays still overlap, one may ascertain that the light sensor receives light only from one optical system at a time by providing a shutter in each one of the optical systems. Operation of such shutter (e.g. an electromechanical or electro-optical shutter) may be coordinated (synchronized) with the action of the actuator on the micro-mechanical mirror. When the shutter in the first optical path blocks the first bundle of rays, the light sensor receives light only from the second bundle of rays, whereas, when the shutter in the second optical path blocks the second bundle of rays, the light sensor receives light only from the first bundle of rays. To compute a stereoscopic image pair, the scene is recorded through both optical systems in a time-multiplexed manner.

As used herein, the term "light" is generally intended to mean any kind of physical wave that can be reflected by a mirror, e.g. electromagnetic radiation from X-UV to far infrared spectral region, including visible light (wavelengths from about 380 to about 780 nm). According to a preferred embodiment, however, the stereoscopic imager is a stereoscopic thermographic imager. Such stereoscopic imager preferably comprises an infrared-light detector as the light sensor, e.g. a pyroelectric infrared detector, an infrared photodiode or a microbolometer, or any other light sensor configured to sense light in the 0.8 to 14 µm wavelength range.

Preferably, the stereoscopic imager comprises an analog-to-digital (A/D) converter for converting the analog signal produced by the light sensor into a digital signal. In the digital signal, samples associated with the first point of sight ("first samples") are interleaved with samples associated with the second point of sight ("second samples") because the micromechanical mirror sweeps the pencil-like field of view of the light sensor alternately through the scene as seen from the first point of sight and through the scene as seen from the second point of sight. In the present context "interleaved" is not intended to mean that in the digital signal one first sample necessarily alternates with one second sample; "interleaved" rather should be taken to mean that groups of first samples and groups of second samples alternate in the digital signal, wherein the size of a group of first or second samples is not necessarily constant from group to group. A processor is preferably operatively coupled to the A/D converter to compute a first image associated with the first point of sight from the first samples and a second image associated with the second point of sight from the second samples. The processor may thus be regarded to "demultiplex" or to disentangle the groups of first or second samples. Due to the oscillatory motion of the micro-mechanical mirror, the samples are not necessarily distributed on a regular grid. Preferably, the processor is configured to transform the data sets through multivariate interpolation to obtain samples distributed on a regular grid in a suitable coordinate system (e.g. in polar, cylindrical or Cartesian coordinates).

The stereoscopic imager is preferably implemented in a computer vision system. The processor may thus be configured for recognizing objects and/or positions of objects in the scene. Image processing (comprising e.g. the image resampling) and object recognition could also be carried out on different processors.

### Brief Description of the Drawings

Further details and advantages of the present invention will be apparent from the following detailed description of several not limiting embodiments with reference to the attached drawings, wherein:
Fig. 1 is a schematic top view of a stereoscopic imager according to a first preferred embodiment of the invention;
Fig. 2 is a schematic top view of a variant of the stereoscopic imager of Fig: 1;
Fig. 3 is a schematic top view of a stereoscopic imager according to a second preferred embodiment of the invention;
Fig. 4 is a schematic front view of a resonant-type micro-mechanical mirror;
Fig. 5 is a block schematic diagram of a computer vision system including a stereoscopic imager; and
Fig. 6 is a schematic illustration of the scene scanning operation and image-resampling;
Fig. 7 is a schematic top view of a stereoscopic imager according to a further preferred embodiment of the invention;
Fig. 8 is a schematic top view of a stereoscopic imager as in Fig. 2 with two one-dimensional micro-mechanical mirrors;
Fig. 9 is a schematic top view of a stereoscopic imager according to a further variant of the stereoscopic imager of in Fig. 2.

### Description of Preferred Embodiments

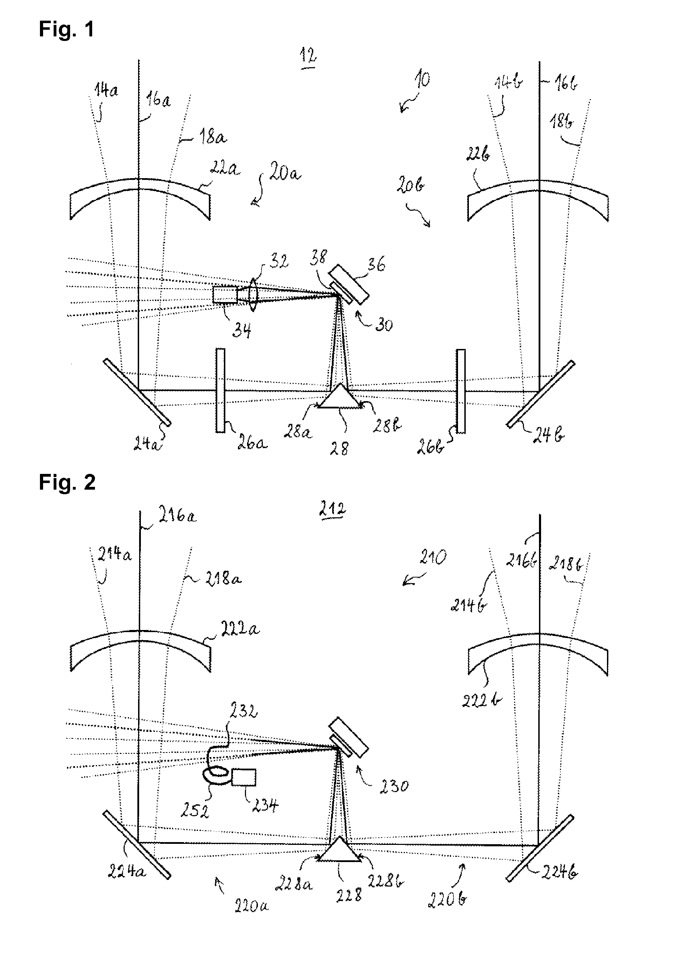

Fig. 1 shows a thermographic stereoscopic imager 10 according to a first embodiment of the invention. Stereoscopic imager 10 is placed in front of a scene 12 to be stereoscopically imaged. Stereoscopic imager 10 comprises a first optical system 20a for viewing the scene as from a first point of sight and a second optical system 20b defining a second light path for viewing the scene as from a second point of sight. The overlap region of the fields of view of the first and the second optical system defines the part of the scene which the imager 10 is capable of imaging stereoscopically. The larger the spacing between the first and second point of sight, the larger is the relative shifting between the corresponding images of the scene and the larger is the stereoscopic effect. The first optical system 20a comprises an input lens 22a, a deflection mirror 24a, and an optical shutter 26a. The second optical system 20b is configured symmetrically to the first optical system 20a and comprises an input lens 22b, a deflection mirror 24b, and an optical shutter 26b. The first and second optical systems further share a wedge 28, a scanning device 30 and a lens 32 (hereinafter termed "ocular lens" for purpose of disambiguation), which focuses the incoming light onto a mid- to long-wavelength IR light sensor 34. Light rays 14a, 16a, 18a enter the first optical system 20a through input lens 22a and are directed by deflection mirror 24a and mirror surface 28a of wedge 28 onto the scanning device 30. Scanning device 30 deflects the light rays 14a, 16a and 18a generally into the direction of the light entrance of the light sensor 34, which light entrance is in this variant of the invention provided by ocular lens 32. Similarly, light rays 14b, 16b, 18b enter the second optical system 20b through input lens 22b and are directed by deflection mirror 24b and mirror surface 28b of wedge 28 onto the scanning device 30. Scanning device 30 then deflects the light rays 14b, 16b and 18b generally into the direction of ocular lens 32. The optical systems 20a, 20b are configured to image the scene 12 into the plane of the light entrance of the light sensor 34. The optical elements (lenses, mirrors, possibly prisms etc.) may be arranged so as to provide wide-angle images of the scene 12. As the light sensor 34, one may e.g. choose a (e.g. Li-TaO₃-based) pyroelectric sensor with a Si input filter (transparent in the 8-14 µm range) or a Ge input filter (transparent in the 5-20 µm range). Alternatively, one could use a thermopile.

The first and second optical systems 20a, 20b define a first and second light path, respectively. The first and second light paths substantially correspond to the paths of the principal rays of the first and second optical system, respectively. In Fig.1, the first and second light paths are drawn as light rays 16a and 16b, respectively. Light rays 14a, 18a, 14b, 18b are "off-axis" rays of the optical systems at the peripheries of the bundles of rays collected by the optical systems 20a, 20b. The optical elements are preferably arranged in such a way as to collimate the off-axis rays 14a, 18a, 14b, 18b. Thereby it is achieved that an angular sweep of the scanning device translates into a greater angular sweep of the field of view of the light sensor through the scene 12.

The scanning device 30 is positioned at an intersection of the first and second light paths. (Depending on the configuration of the optical systems, there may be more than one such intersection but Fig. 1 shows only one.) The light entrance (ocular lens 32) of the light sensor 34 is arranged in facing relationship to the scanning device 30, on the axis defined by the bisectrix of light rays 16a and 16b reflected on the scanning device 30 when the latter is in its equilibrium position.

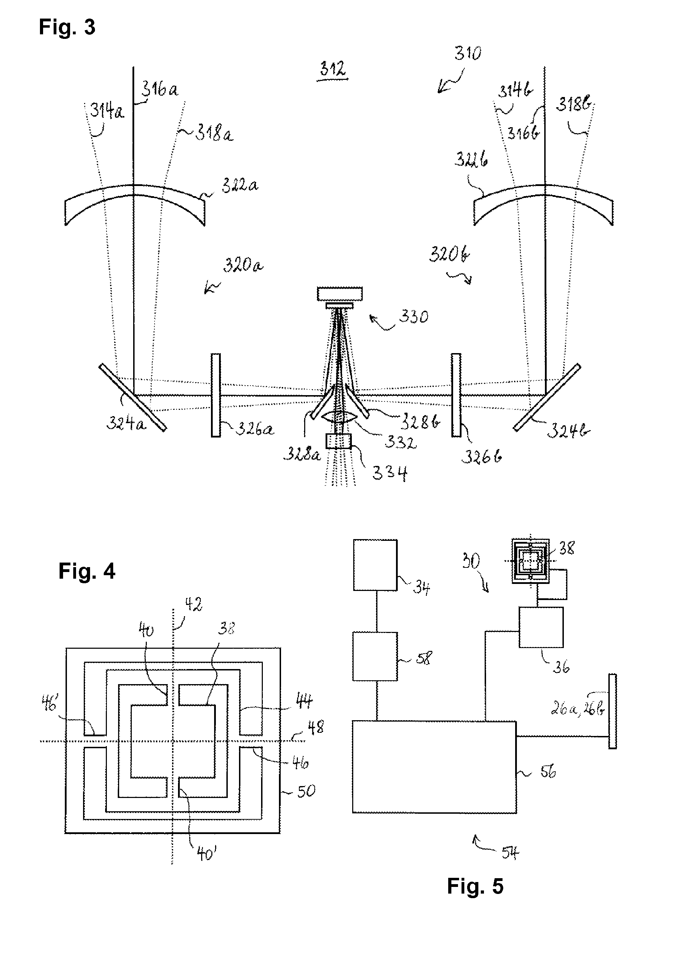

The actuator 36 of scanning device 30 drives a resonance-type micro-mechanical mirror 38, which provides the mobile reflecting surface of scanning device 30. The micro-mechanical mirror 38 is shown in more detail in Fig. 4. It is mounted on first torsion bars 40, 40', which define a first tilting axis 42. The first torsion bars 40, 40' connect the micromechanical mirror to an intermediate frame 44, which is itself mounted on second torsion bars 46, 46'. The second torsion bars 46, 46'define a second tilting axis 48, which is orthogonal to the first tilting axis 42. The second torsion bars 46, 46' connect the intermediate frame 44 to an outer frame 50. The micro-mechanical mirror 38, the intermediate and outer frames 44, 50 and the torsion bars 40, 40', 46, 46' are preferably integrally formed from the same substrate. The actuator 36 and the micromechanical mirror 38 comprise electromagnetic elements (e.g. coils or conductor loops, or capacitor plates) and possibly also permanent-magnetic elements to transmit forces and torques between the actuator 36 and the micromechanical mirror 38, causing the latter to leave the position in which the sum of mechanical forces (here: the torsion forces of the torsion bars 40, 40', 46, 46') acting thereon cancels (equilibrium position). In operation, actuator 36 applies oscillating signals to the electromagnetic elements, which create periodically inverting electric and/or magnetic forces and torques that act on the micromechanical mirror 38 and cause it to tilt to and fro about the first axis 42. Simultaneously, the intermediate frame is caused to tilt to and fro about the second axis 48 under the action of the electric and/or magnetic forces and torques. As a result, the micromechanical mirror 38 carries out a movement in two dimensions corresponding to the superposition of the two simple oscillatory movements. The actuator 36 is controlled and/or configured to drive both movements at or close to their respective resonance frequency in order to achieve optimal excursion of the micromechanical mirror 38 in both directions at low power consumption. More details about scanning devices of the discussed type can be found e.g. in US patents 7,012,737 and 5,912,608, incorporated herein by reference in their entirety with effect for the jurisdictions in which such incorporation by reference is permitted. Two-dimensional scanning devices are e.g. available from Nippon Signal under the trade name Eco Scan.

The light sensor 34 and its light entrance are configured such that the resulting field of view is substantially narrower than the solid angle corresponding to the scene 12 to be imaged. In operation, the scanning device 30 sweeps the field of view of the light sensor 34 over the mirror surfaces 28a and 28b of the wedge 28. While surface 28a is in the field of view of light sensor 34, the latter detects light originating from small parts of the scene 12 as if light sensor 34 were placed at the first point of sight. While surface 28b is in the field of view of light sensor 34, the latter detects light originating from small parts of the scene 12 as if light sensor 34 were placed at the second point of sight.

If the bundles of rays collected by the optical systems 20a, 20b do not overlap at the light entrance of the light sensor 34, the latter receives light from at most one of the optical systems at a time, whichever is the instant orientation of the scanning device 30. Accordingly transitions of the field of view between the mirror surfaces 28a and 28b may be identified because there is a short time during which the light detector receives light through neither the first nor the second optical system.

If, however, the geometry of the optical systems 20a, 20b is such that the boundaries of the bundles of rays overlap at the light entrance of the light sensor 34, there will be times during which the light sensor 34 receives light through both optical systems 20a, 20b. Samples collected during these times cannot be used and would have to be discarded. To avoid this kind of situation, the stereoscopic imager 10 of Fig. 1 comprises optical shutters 26a and 26b arranged in both the first and the second light paths. These shutters 26a, 26b are opened and closed in synchronization with one another so that only one of the shutters 26a, 26b is open at a time. When shutter 26a is open and shutter 26b is closed, the light sensor 34 receives light through the first optical system 20a whereas light rays (e.g. light rays 14b, 16b, 18b) entering the second optical system 20b are blocked. When shutter 26b is open and shutter 26a is closed, the light sensor 34 receives light through the second optical system 20b whereas light rays (e.g. light rays 14a, 16a, 18a) entering the first optical system 20b are blocked. Optical shutters 26a and 26b can be synchronized with the scanning device 30 in such a way that they open and close each time the field of view of the light sensor 34 is passes from the first to the second optical system and vice-versa. Such synchronization may be especially useful in applications, in which the stereoscopic images have to be acquired quickly (e.g. real-time applications), since it improves the luminous efficiency of the stereoscopic imager 10. It should be noted, however, that the optical shutters 26a, 26b could also be controlled without specific synchronization on the oscillatory movement of the scanning device 36. In this case, each shutter 26a, 26b should remain open at least during a complete period of the scanning device 36 in order to ascertain that the stereoscopic half-images are acquired completely.

Fig. 2 shows a variant of the stereoscopic imager of Fig. 1 without the optical shutters. Stereoscopic imager 210 is arranged for stereoscopically imaging a scene 212. Stereoscopic imager 210 comprises a first optical system 220a for viewing the scene as from a first point of sight and a second optical system 220b defining a second light path for viewing the scene as from a second point of sight. The first optical system 220a comprises an input lens 222a, a deflection mirror 224a and mirror surface 228a of wedge 228. The second optical system 220b is configured symmetrically to the first optical system 220a and comprises an input lens 222b, a deflection mirror 224b and mirror surface 228b of wedge 228. The optical systems 220a and 220b further share scanning device 230, which deflects incoming light rays 214a, 216a, 218a and 214b, 216b, 218b generally into the direction of the light entrance of the light sensor 234, which light entrance is in this variant of the invention provided by input end 232 of optical fiber 252. Optical fiber 252 guides light coupled into it to the light sensor 234. The input end 232 of optical fiber 252 is arranged on the axis defined by the bisectrix of light rays 216a and 216b reflected on the scanning device 230 when the latter is in its equilibrium position. Scanning device 230 is of the same type and configuration as the one described with reference to Fig. 1 and it operates in the same way.

As explained hereinabove, optical shutters can be omitted if it is otherwise ascertained that there is no overlap of the bundles of rays from the first and the second optical systems 220a and 220b on the light entrance of light sensor 234. This condition is deemed satisfied in Fig. 2. In practice, on can achieve this using light stops and apertures (not specifically shown in Fig. 2) suitably placed in the optical systems 220a, 220b.

Fig. 3 shows a further embodiment of a thermographic stereoscopic imager. Stereoscopic imager 310 is arranged to stereoscopically image scene 312. Stereoscopic imager 310 comprises a first optical system 320a for viewing the scene as from a first point of sight and a second optical system 320b defining a second light path for viewing the scene as from a second point of sight. The first optical system 320a comprises an input lens 322a, deflection mirrors 324a, 328a and an optical shutter 326a. The second optical system 320b is configured symmetrically to the first optical system 320a and comprises an input lens 322b, deflection mirrors 324b, 328b and an optical shutter 326b. The first and second optical systems further share a a scanning device 330 and an ocular lens 332, which focuses the incoming light onto a light sensor 334. Light rays 314a, 316a, 318a enter the first optical system 320a through input lens 322a and are directed by deflection mirrors 324a and 328a onto the scanning device 330. Scanning device 330 reflects the light rays 314a, 316a and 318a generally into the direction of the light entrance of the light sensor 334, which light entrance is in this embodiment of the invention provided by ocular lens 332. Similarly, light rays 314b, 316b, 318b enter the second optical system 320b through input lens 322b and are directed by deflection mirror 324b and 328b onto the scanning device 330. Scanning device 330 then deflects the light rays 314b, 316b and 318b generally into the direction of ocular lens 332. With the exception that the wedge 28 is replaced by deflection mirrors 328a, 328b and that the scanning device 330 is arranged in a normal-incidence configuration, the system of Fig. 3 is the same as the system of Fig. 1. Accordingly, the reader is referred to the description of the first embodiment for further details.

Fig. 5 is a block schematic diagram of a computer vision system 54 based on a stereoscopic imager as described so far with reference to Figs. 1 to 4. Computer vision system 54 comprises a stereoscopic imager, which is represented in Fig. 5 only by the light sensor 34, the scanning device 30 (including the micromechanical mirror 38 and actuator 36) and one of the optical shutters 26a, 26b, a microprocessor 56 an A/D converter connected between the light sensor 34 and microprocessor 56.

A/D converter 58 converts the analog signal produced by the light sensor 34 into a digital signal. In the digital signal, samples associated with the first point of sight ("first samples") are interleaved with samples associated with the second point of sight ("second samples") because the micromechanical mirror 38 sweeps the field of view of the light sensor 34 alternately through the scene as seen from the first point of sight and through the scene as seen from the second point of sight. Microprocessor 56 controls the actuator 36 of scanning device 30, as well as the optical shutters 26a, 26b (if present). Scanning device 30 could be equipped with a position detector in order to feed the current position of the micromechanical mirror 38 back to the microprocessor 56.

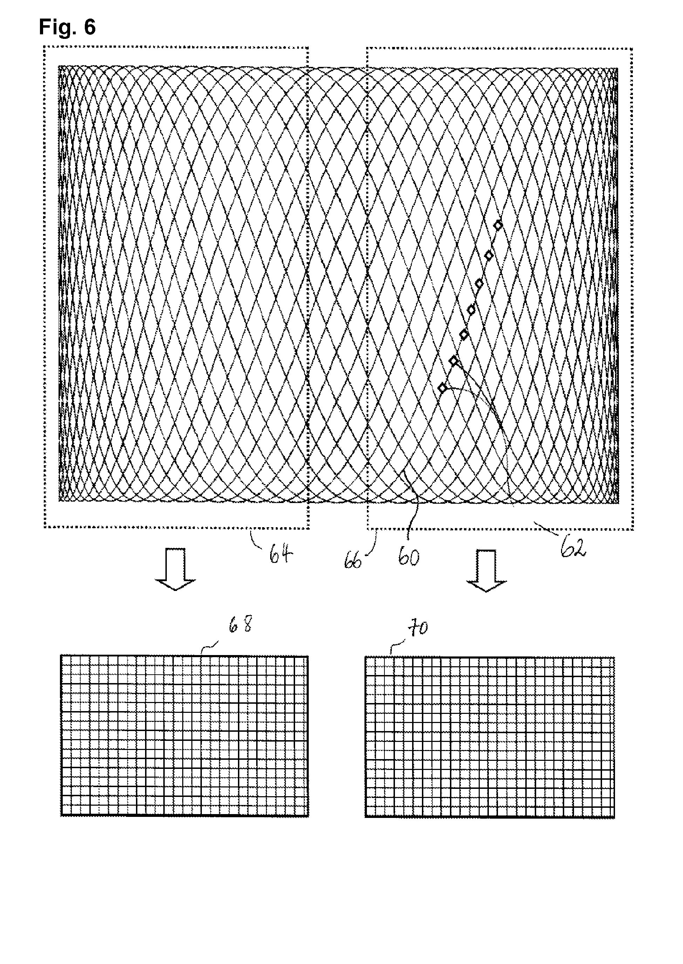

Fig. 6 illustrates a possible scanning curve 60 described by the 2D rocking movement of the micromechanical mirror. Being a superposition of two mutually orthogonal oscillations, the scanning curve 60 corresponds to a Lissajou curve. In order to achieve maximum deflection angles, the micromechanical mirror has to be driven in resonance. The resonance frequencies depend on the size, the mass, the torsion bars etc. of the micromechanical mirror. Accordingly, the micromechanical mirror is chosen such that its resonance frequencies result in a Lissajou curve that forms a dense pattern. The analog signal output by the light detector may be sampled at a predefined sampling rate. A few sampling points 62 are shown in Fig. 6 for illustration. One notes that the sampling points 62 are not distributed evenly over the entire sampling area. The dotted boxes 64 and 66 indicate the sampling points that belong to the first stereoscopic half-image (i.e. the image representing the scene as seen from the first point of sight) and the second stereoscopic half-image (i.e. the image representing the scene as seen from the second point of sight), respectively. The area between the dotted boxes 64, 66 corresponds to positions of the scanning device, in which the light sensor receives light neither from the first nor the second optical system (it is assumed here that the bundle of rays following the first light path does not overlap with the bundle of rays following the second light path). If there were an overlap of the bundles of rays, dotted boxes 64 and 66 would have to be drawn with an overlap. A scan through the entire sampling area gives rise to a first data set corresponding to the first stereoscopic half-image and a second data set corresponding to the second stereoscopic half-image. The microprocessor disentangles these data sets as they arrive on the digital signal provided by A/D converter 58 and puts them into a first and second storage areas. To disentangle the data sets, the microprocessor 56 needs to know at each time whether the light sensor currently receives light from the first or the second optical system as well as the current orientation of the micromechanical mirror 38. Microprocessor 56 may gain this kind of information based on the control signal it provides to the optical shutters 26a, 26b, the control signal it provides to the scanning device 30 and/or the feedback signal (if any) from the scanning device 30.

The microprocessor then transforms the data sets through multivariate interpolation to obtain samples distributed on a regular grid in a Cartesian coordinate system. Resampled stereoscopic half-images are schematically illustrated at reference numbers 68 and 70 in Fig. 6. Samples belonging to neither half-image are rejected. After the resampling step, the microprocessor 56 analyses the stereoscopic half-images 68, 70 and identifies patterns (edges, areas of little contrast, etc.) occurring therein in order to recognize objects and/or positions of objects in the scene. Algorithms and methods of stereoscopic image evaluation, of object recognition and/or of object classification are known in the art and therefore need not be discussed herein in detail.

As an alternative to sampling at a predefined fixed sampling rate, one may instead sample the analog signal output by the light detector at times corresponding to a regular grid. In this case, the time between subsequent sampling points is not constant along the Lissajou curve but the samples taken directly correspond to a regular grid pattern. This alternative may be preferred because there is no need for computationally costly image resampling.

The skilled person will know ways to adapt the optical system to the intended application of the stereoscopic imager, to the dimensions of the scene to be imaged, to the wavelength of the light to be detected, etc. Figs. 1-3 show generally planar stereoscopic imager configurations but the skilled person may easily design configurations, wherein the first and/or the second optical system defines a more complex light path e.g. in three dimensions. For instance, in the embodiment of Fig. 1, the light entrance of the light sensor could be placed above or beneath the wedge 28, or above or beneath the scanning device 30, provided the neutral position of the scanning device 30 is adjusted accordingly. There are many further options for varying the optical systems defining the first and second light paths. For instance, one could use curved mirrors instead of lenses (as items 24a, 24b in Fig. 1), the micro-mechanical mirror 38 could be curved, etc. It shall be understood that the number of optical elements in the illustrated optical systems has been kept low in order not to overload the drawings. In a practical application, the optical systems may well be of greater complexity.

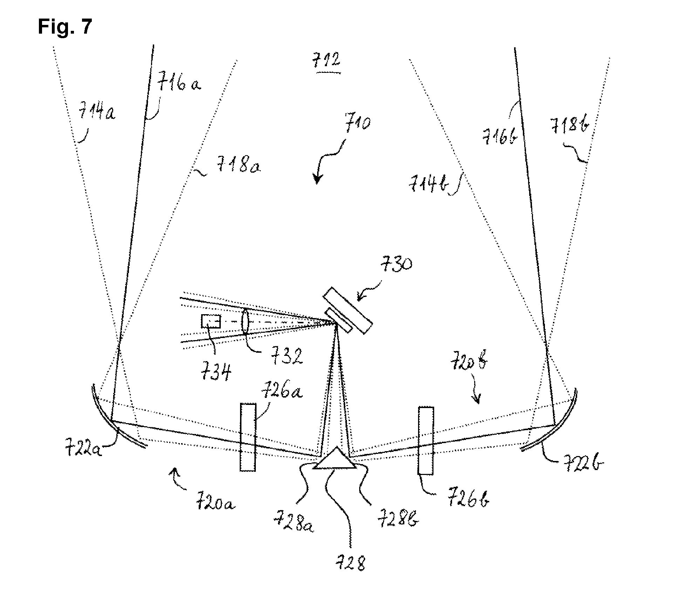

Fig.7 shows yet another embodiment of the stereoscopic imager. Stereoscopic imager 710 is arranged for stereoscopically imaging a scene 712. Stereoscopic imager 710 comprises a first optical system 720a for viewing the scene as from a first point of sight and a second optical system 720b defining a second light path for viewing the scene as from a second point of sight. The first optical system 720a comprises a curved input mirror 722a, first optical shutter 726a and mirror surface 728a of wedge 728. The second optical system 720b is configured symmetrically to the first optical system 720a and comprises a curved input mirror 722b, second optical shutter 726b and mirror surface 728b of wedge 728. The optical systems 720a and 720b further share scanning device 730, which deflects incoming light rays 714a, 716a, 718a and 714b, 716b, 718b generally into the direction of the light entrance of the light sensor 734, which is here provided by ocular lens 732. Ocular lens 732 is arranged on the axis defined by the bisectrix of light rays 716a and 716b reflected on the scanning device 730 when the latter is in its equilibrium position. Scanning device 730 is of the same type and configuration as the one described with reference to Fig. 1 and it operates in the same way. The optical shutters 726a, 726b can be omitted if it is otherwise ascertained that there is no overlap of the bundles of rays from the first and the second optical systems 720a and 720b on the light entrance of light sensor 734. Input mirrors 722a and 722b are shown as concave mirrors in the drawing. As an alternative, convex mirrors could be used as input mirrors.

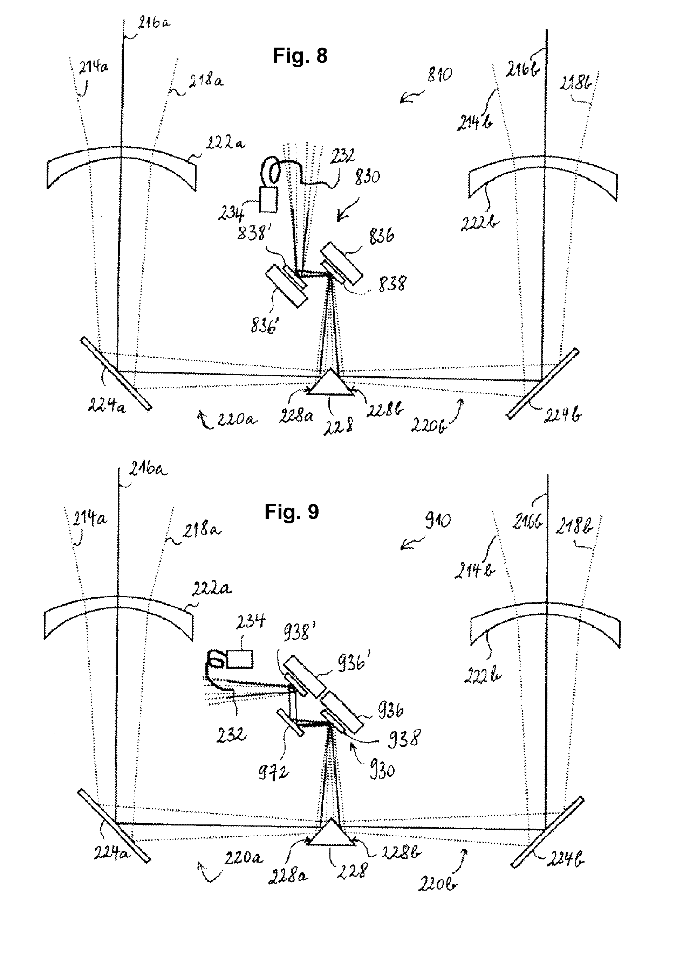

Fig. 8 shows a variant of the stereoscopic imager of Fig. 2 with a scanning device 830 comprising two one-dimensional resonant-type micro-mechanical mirrors 838 and 838' driven by actuators 836 and 836', respectively. In all other respects, the system of Fig.8 corresponds to the system of Fig. 2. Accordingly, the same reference numbers have been used for elements already encountered in Fig. 2. The tilting axis of micro-mechanical mirror 838 is comprised in the plane of the drawing, whereas the tilting axis of micromechanical mirror 838' is perpendicular to that plane. The actuators 836, 836' are configured to drive micromechanical mirrors 838, 838' at or close to their respective resonance frequency in order to achieve optimal excursion of the micro-mechanical mirrors 838, 838' at low power consumption. The micro-mechanical mirrors 838, 838' are operated simultaneously in order to achieve a two-dimensional scanning curve through the scene to be imaged. The cycle durations of the angular oscillatory movements of the micro-mechanical mirrors 838, 838' chosen relative to one another such that the micro-mechanical mirrors sweep the pencil-like field of view of the light sensor 234 through the scene according to a dense pattern.

Fig. 9 shows a further variant of the stereoscopic imager of Fig. 2 with a scanning device 930 comprising two one-dimensional resonant-type micro-mechanical mirrors 938 and 938' driven by actuators 936 and 936', respectively. The scanning device 930 further comprises an intermediary deflection mirror 972 arranged arranged in the first and second light paths between the micro-mechanical mirrors 938 and 938'. In all other respects, the system of Fig. 9 corresponds to the system of Fig. 2. Accordingly, the same reference numbers have been used for elements already encountered in Fig. 2. The tilting axis of micro-mechanical mirror 938 is comprised in the plane of the drawing, whereas the tilting axis of micromechanical mirror 938' is perpendicular to that plane. The actuators 936, 936' are configured to drive micromechanical mirrors 938, 938' at or close to their respective resonance frequency in order to achieve optimal excursion of the micro-mechanical mirrors 938, 938' at low power consumption. The micro-mechanical mirrors 938, 938' are operated simultaneously in order to achieve a two-dimensional scanning curve through the scene to be imaged. The cycle durations of the angular oscillatory movements of the micro-mechanical mirrors 938, 938' chosen relative to one another such that the micro-mechanical mirrors sweep the pencil-like field of view of the light sensor 234 through the scene according to a dense pattern.

It is worthwhile noting that the two-mirror solution may also be implemented in a similar manner in the embodiments of Figs. 1, 3 and 7.

While specific embodiments have been described in detail, those with ordinary skill in the art will appreciate that various modifications and alternatives to those details could be developed in light of the overall teachings of the disclosure. Accordingly, the particular arrangements disclosed are meant to be illustrative only and not limiting as to the scope of the invention, which is to be given the full breadth of the appended claims and any and all equivalents thereof. For instance, those skilled in the art will appreciate that the examples of thermographic stereoscopic imagers may easily be modified for visible light (in the spectral range from about 380 to 750 nm).

### Legend:

- 10, 210, 310, 710, 810, 910: Stereoscopic imager
- 12, 212, 312, 712: Scene to be imaged
- 14a, 14b, 16a, 16b, 18a, 18b, 214a, 214b, 216a, 216b, 218a, 218b, 314a, 314b, 316a, 316b, 318a, 318b, 714a, 714b, 716a, 716b, 718a,718b: Light ray
- 20a, 220a, 320a, 720a: First optical system
- 20b, 220b, 320b, 720b: Second optical system
- 22a, 22b, 222a, 222b, 322a, 322b: Input lens
- 24a, 24b, 224a, 224b, 324a, 324b: Deflection mirror
- 26a, 26b, 326a, 326b, 726a, 726b: Optical shutter
- 28, 228, 728: Wedge
- 28a, 28b, 228a, 228b, 728a, 728b: Mirror surface of the wedge
- 328a, 328b: Deflection mirror
- 30, 230, 330, 730: Scanning device
- 32, 332, 732: Ocular lens
- 232: Input end of optical fiber
- 34, 234, 334, 734: Light sensor
- 36, 836, 836', 936, 936': Actuator
- 38, 838, 838', 938, 938': Micro-mechanical mirror
- 40, 40': First torsion bars
- 42: First tilting axis
- 44: Intermediate frame
- 46, 46': Second torsion bars
- 48: Second tilting axis
- 50: Outer frame
- 252: Optical fiber
- 54: Computer vision system
- 56: Microprocessor
- 58: A/D converter
- 60: Scanning curve
- 62: Sampling points
- 64, 66: Dotted boxes
- 68, 70: Resampled stereoscopic half-images
- 722a: First input mirror
- 772b: Second input mirror
- 972: Intermediary deflection mirror

## Claims

1. Stereoscopic imager (10) for producing a stereoscopic image pair of a scene (12), said stereoscopic imager comprising
a first optical system (20a) defining a first light path, for viewing said scene as from a first point of sight;
a second optical system (20b) defining a second light path, for viewing said scene as from a second point of sight different from said first point of sight;
a light sensor (34) having a light entrance (32) arranged therewith, from which entering light passes to said light sensor;
a scanning device (30) arranged with respect to said light entrance at a position where the first and second light paths intersect, to scan the field of view of said light sensor across said scene as viewed from the first and second point of sight, respectively;
**characterized in that** said scanning device (30) comprises a resonance-type micro-mechanical mirror (38) mounted on first torsion bars (40, 40') defining a first tilting axis (42) and an actuator (36) for driving said micro-mechanical mirror in angular oscillatory motion about said first tilting axis,
**in that** said scanning device has a neutral position, in which first and second light paths are deviated into a first and second direction, respectively;
and **in that** said light entrance is arranged in the bisecting plane of said first and second directions.

2. Stereoscopic imager as claimed in claim 1, wherein said micro-mechanical mirror and said first torsion bars are mounted on second torsion bars (46, 46') defining a second tilting axis (48), and wherein said actuator is configured for driving said micro-mechanical mirror in a two-dimensional angular oscillatory motion about said first and second axes to achieve a two-dimensional scanning curve.

3. Stereoscopic imager as claimed in claim 1, wherein said scanning device comprises a second resonance-type micro-mechanical mirror mounted on second torsion bars defining a second tilting axis and a second actuator for driving said second micro-mechanical mirror in angular oscillatory motion about said second tilting axis; and
wherein said first and second tilting axes are chosen relative to one another such that said micro-mechanical mirrors jointly achieve a two-dimensional scanning curve when driven by their respective actuators.

4. Stereoscopic imager as claimed in claim 3, wherein said scanning device (930) comprises an intermediary mirror (972) arranged in said first and second light paths between said micro-mechanical mirrors.

5. Stereoscopic imager as claimed in claim 2, 3 or 4, wherein said two-dimensional scanning curve corresponds to a Lissajou curve (60).

6. Stereoscopic imager as claimed in any one of claims 2 to 5, wherein the neutral position of said scanning device corresponds to an equilibrium position of said first torsion bars and said second torsion bars.

7. Stereoscopic imager as claimed in any one of claims 1 to 6, wherein said first optical system is configured to collect light propagating from said scene towards said first point of sight in a first bundle of rays (14a, 16a, 18a) following said first light path, wherein said second optical system is configured to collect light propagating from said scene towards said second point of sight in a second bundle of rays (14b, 16b, 18b) following said second light path, and wherein said light entrance is positioned in such a way that light of at most one of said first and second bundles of rays passes there through at a time and is coupled into said light sensor.

8. Stereoscopic imager as claimed in any one of claims 1 to 7, comprising a first optical shutter (26a) arranged in said first light path and a second optical shutter (26b) arranged in said second light path, for alternately opening and closing said first and said second light paths.

9. Stereoscopic imager as claimed in any one of claims 1 to 8, wherein said stereoscopic imager is a stereoscopic thermographic imager.

10. Stereoscopic imager as claimed in claim 9, wherein said light sensor comprises an infrared detector, such as e.g. a pyroelectric infrared detector or an infrared photodiode or a thermopile.

11. Stereoscopic imager according to any one of claims 1 to 10, comprising an A/D converter (58) for converting an analog signal from said light sensor into a digital signal, in which first samples associated with said first point of sight are interleaved with second samples associated with said second point of sight, and a processor (56) operatively coupled to said A/D converter to compute a first image (68) associated with said first point of sight from said first samples and a second image (70) associated with said second point of sight from said second samples.

12. Stereoscopic imager according to any one of claims 1 to 11, wherein first and second optical systems (720a, 720b) comprise a first and a second curved input mirror (722a, 722b), respectively.

13. Computer vision system (54) comprising a stereoscopic imager as claimed in any one of claims 1 to 12.

14. Computer vision system according to claim 13, wherein said processor (56) is configured for recognizing objects and/or positions of objects in said scene.
